# EUROPEAN PATENT APPLICATION

(11) **EP 4 661 117 A1**
(43) Date of publication of application: **10.12.2025**
(21) Application number: 24179534.3
(22) Date of filing: 03.06.2024
(51) Int. Cl.: H01M 8/0206, H01M 8/0221, H01M 8/0228, H01M 8/0247, H01M 8/0271, H01M 8/0284, H01M 8/0273, H01M 8/0276, H01M 8/0286

(54) **A MEMBRANE-ELECTRODE-ASSEMBLY FOR FUEL CELLS AND ELECTROLYSERS WITH ION EXCHANGE MEMBRANE, A CELL STACK AND A METHOD OF MANUFACTURING**

(71) Applicant: AVL List GmbH, 8020 Graz (AT); AVL Fuel Cell Canada Inc, Burnaby, British Columbia V5A 4W2 (CA)
(72) Inventor: Thomas, Owen, Vancouver BC, V6E 4V3 (CA); Hsieh, Yvonne, Burnaby, V5C1W5 (CA)
(74) Representative: Gamper, Bettina

(57) **Abstract**

The invention relates to a membrane electrode assembly (100). The membrane electrode assembly (100) comprises a catalyst coated membrane (CCM) member (110) with a polymer membrane (111) that is at least partially coated with a catalyst coating (112, 113), a frame member (140), two fluid distribution layers (121, 122) and an adhesive layer (150). The CCM member (110), the adhesive layer (150) and the frame member (140) are stacked in a stacking direction (SD). The fluid distribution layer (121, 122), which is arranged on the same membrane side (S1, S2) as the frame member (140), is arranged laterally inwards of an inner edge of the frame member (140) and so that the fluid distribution layer (121, 122) overlaps the adhesive layer (150) and the CCM member (110). The adhesive layer (150) forms an adhesive bond between the CCM member (110), the frame member (140) and said fluid distribution layer (121, 122). The frame member (140) extends from the adhesive layer (150) in the stacking direction (SD) beyond said fluid distribution layer (121, 122). With this configuration, the frame member (140) can provide a sealing surface (144) in a stack and thus, can function as a seal for the membrane electrode assembly (100). The sealing function can be improved by providing the frame member (140) at least partially from a material for sealing. For instance, the frame member (140) can be made entirely of a seal material or may comprise at least a seal layer (1433) made of a seal material. The invention relates further to a solid polymer electrolyte cell stack with said membrane electrode assembly (100) and a method of manufacturing the membrane electrode assembly (100).

## Description

The present invention relates to a membrane electrode assembly (MEA) for a stackable cell for a fuel cell process and/or for an electrolysis process. The MEA comprises a catalyst coated membrane (CCM), fluid distribution layers and a component for framing the CCM. The invention also relates to a solid polymer electrolyte cell stack and a method of manufacturing said MEA.

Fuel cells and electrolysers are prescribed an important role in the transformation process towards emission-free energy generation and energy storage. Amongst available fuel cell and electrolyser technology, proton exchange membrane (PEM) cells and anion exchange membrane (AEM) cells are considered viable options for industrial applications. Both, PEM and AEM cells, use semipermeable membranes that are made from a solid polymer and are designed to conduct ions, such as cations (often protons, H+) or anions (often hydroxide ions, OH-), while separating process substances on either side of the membrane and electrically isolating adjacent catalyst layers.

A substructure of said cells is a membrane electrode assembly, which typically consists of stacked up components, such as a catalyst coated membrane (CCM), a frame and two porous transport layers (PTLs), each provided on one side of the CCM. Commonly, in such arrangement the components are attached to each other at a joint area along the outer perimeter of the CCM.

In an effort to improve such MEAs with respect to reliability, durability, efficiency and manufacturing complexity, the inventors have developed a design of the MEA, which sees the PTL, which is on the same side of the CCM as the frame, placed within the active area of the CCM surrounded by the frame. Thereby, it is possible to ensure a good connection between the CCM and said PTL because it can be avoided that said PTL must be bent to bridge the height difference between the joint area at the outer perimeter and the active area.

Integration of the MEAs with the developed design in commonly used cell infrastructure, however, poses several technical challenges. In particular for operation, known cells are typically compressed at a section along the outer perimeter to provide a good and strong connection between the individual components as well as fluid tightness.

However, in the developed design, the joint area at the outer perimeter is not automatically the thickest part of the MEA. For instance, the PTL on the same side as the frame may exceed the thickness of the frame. Accordingly, compressing the joint area cannot be ensured without providing additional components, such as seals or shims, along the outer perimeter. However, to avoid areas where fluids can flow around the active area, it is necessary for the additional components to align exactly with the assembly and to comply with strict manufacturing requirements also. This increases complexity and costs for the MEA and for manufacturing. Also, reliability and durability of the MEA is more difficult to ensure.

It is thus, an object of the invention to overcome at least some of these disadvantages. In particular, it is an object of the invention to provide a design of a membrane electrode assembly that reduces or eliminates the necessity for additional components to ensure sufficient compression of the joint area and fluid tightness.

The above technical problem is solved by the membrane electrode assembly of claim 1, the solid polymer electrolyte cell stack of claim 12, and the method of manufacturing a membrane electrode assembly of claim 13.

Further advantages and features of the invention are evident from the dependent claims, the description, and the drawings. Features and details described in connection with the membrane electrode assembly of the invention naturally also apply to the solid polymer electrolyte cell stack of the invention and to the method of manufacturing a membrane electrode assembly of the invention, and vice versa, respectively, so that for disclosure, reference is or can be made mutually to the individual aspects of the invention.

A first aspect of the invention relates to a membrane electrode assembly for a stackable cell for a fuel cell process and/or for a stackable cell for electrolysis. The membrane electrode assembly comprises a catalyst coated membrane (CCM) member forming an electrochemically active core unit of the membrane electrode assembly. The CCM member comprises a polymer membrane that forms a solid electrolyte for exchange of ions between its two opposite membrane sides. The CCM member comprises further one or more catalyst coatings, each of which is receptive to electrons and applied at least partially to one of the membrane sides. Each membrane side forms an electrode for conducting electrons associated with the exchange of ions at the polymer membrane. The membrane electrode assembly further comprises a frame member for framing the CCM member. The frame member is arranged on one of the membrane sides and comprises a frame overlap section that overlaps a peripheral area of the CCM member. The membrane electrode assembly comprises two fluid distribution layers. Each fluid distribution layer is arranged on one of the membrane sides and each fluid distribution layer forms for the respective membrane side a diffusor structure for surface distribution and/or collection of fluid process streams. The membrane electrode assembly further comprises an adhesive layer, which is provided on the same membrane side as the frame member. The CCM member, the adhesive layer and the frame member are stacked in a stacking direction in this order. The adhesive layer comprises an adhesive overlap section that overlaps with the peripheral area and the frame overlap section. The adhesive overlap section forms an adhesive bond between the CCM member and at least the frame member and extends laterally inwards with respect to the peripheral area beyond the frame overlap section to delimit a process area of the CCM member. Further, the one of the fluid distribution layers, which is arranged on the same membrane side as the frame member, is arranged laterally from the frame overlap section on the adhesive overlap section and on the process area. The frame member extends, at least at the frame overlap section, at least partially from the adhesive layer in the stacking direction beyond the one fluid distribution layer.

In other words, the invention provides for a membrane electrode assembly for a cell that can be used in a fuel cell process and/or in an electrolysis process. For instance, the MEA may be used in a fuel cell or in an electrolyser cell. For example, the electrolyser may be configured for electrolysis of water. It is further conceivable that the cell may be a regenerative fuel cell.

The MEA comprises a CCM member with a polymer membrane for exchange of ions between its two opposite membrane sides. Therein, the term "*ion*" may be understood as an atom or molecule with a positive or negative electric charge. For instance, the ion may be a cation (e.g. proton, H+) or an anion (e.g. hydroxide, OH-). The polymer membrane is permeable for ions and may form a barrier to certain substances, such as gases like oxygen or hydrogen. Additionally, the membrane is electrically isolating.

The CCM member comprises a catalyst coating, which is receptive to electrons and at least partially applied to both of the membrane sides. Each of the catalyst coatings forms an electrode. The electrodes may be designed to promote the electrochemical reactions required for electrolyser operation. The electrodes may comprise an anode and a cathode. Anode and cathode may be arranged on anyone of the two membrane sides. In an electrolyser cell, the anode may be the water side, where water is supplied as reactant and oxidized to oxygen, protons, and electrons. The cathode may be the hydrogen side, where supplied electrons and protons, which travelled through the polymer membrane, are combined to form hydrogen. In a fuel cell, the anode may be a fuel side, where fuel, such as hydrogen, is supplied as reactant and oxidized to protons and electrons. The cathode may be an air side, where oxygen from the supplied air as the reactant, supplied electrons and protons, which travelled through the polymer membrane, combine to water.

The MEA further comprises a frame member for framing the CCM member. Preferably, the MEA may comprise only a single, i.e. only one, frame member. Therein, the term "*frame member*" may be understood as a mounting structure for carrying the MEA and/or holding the MEA in position. The term "*framing*" may be understood as surrounding an area at least partially with a strip of material. Preferably, the frame member may provide sufficient mechanical support for arranging the MEA in a cell stack. Preferably, the frame member may have a rectangular cross section with an opening at the centre. For instance, the frame member may be a socket.

The frame member is arranged on one of the membrane sides overlapping a peripheral area of the CCM member with a frame overlap section.

Therein, the term "*peripheral area*" may be understood as an area of the CCM member in proximity to the outer perimeter of the CCM member and/or that includes the outer perimeter. For instance, the peripheral area may be at the outer edges of the CCM member and/or may extend circumferentially at least partially or completely along the outer edges of the CCM member. The outer edges may define the outer perimeter of the CCM member. The term "*overlap*" may be understood as at least partially covering or extending beyond a structure. The term "*frame overlap section*" may be understood as a volume section of the frame member, which may cover at least part of the surface of the CCM member. Preferably, the frame overlap section may define an opening in the frame member for substances to travel to the surface of the CCM member for partaking in a fuel cell process or an electrolysis process.

The MEA further comprises two fluid distribution layers. Each of the fluid distribution layers is arranged on one of the membrane sides and forms a diffusor structure for surface distribution and/or collection of fluid process streams of the CCM member. For instance, the fluid process streams may comprise water, hydrogen and oxygen. The process streams may interact with the CCM member.

The term "*fluid distribution layer*" may be understood as a structure for distributing and/or collecting reactants or by-products across the surface of the electrodes and for the removal of fluid by-products from the electrodes. Fluids passing through a fluid distribution layer may be substances in a gaseous and/or liquid state. Preferably, the fluid distribution layers may be made from a porous material. More preferred, the fluid distribution layers may be electrically conductive. The fluid distribution layer may be flat, and thus, may have a small thickness relatively to its length and width. One or both of the fluid distribution layers may be a porous transport layer and/or a gas distribution layer. At least one of the fluid distribution layers may be made of a metal-based material. Therein, the expression "*metal-based*" may be understood as being made of metal, consisting of metal or at least comprising metal. For instance, at least one of the fluid distribution layers may be made of titanium, titanium coated in platinum or nickel. For example, in PEM electrolysers, the fluid distribution layer on the anode side may be required to be resistant to high electrical potentials. Similarly, for AEM electrolysers, also the fluid distribution layer on the anode side may be provided to be resistant to high potentials, and/or resistant to corrosive solutions. For these cases, fluid distribution layers comprising metal may be used as materials for the anode in PEM and AEM electrolysers. However, any material composition suitable for sustaining the high electric potentials found at anodes of electrolysers can be considered. Alternatively or additionally, at least one of the fluid distribution layers may be made of a carbon-based material, such as a porous and/or fibrous carbon material. For example, in AEM and PEM designs, cathode potentials are typically lower. Thus, in such cases, fluid distribution layers comprising carbon may be used at the cathode.

The MEA further comprises an adhesive layer for forming an adhesive bond. The adhesive layer is provided on the same membrane side as the frame member. Preferably, the MEA may only comprise a single, i.e. only one, adhesive layer.

Therein, the term "*adhesive layer*" may be understood as a defined volume, film or sheet made of a material capable of adhering to components of the MEA. The term "*bond*" may be understood as a joint between at least two components having a strong material connection. For instance, the adjoining materials may be joined by surface bonding, which preferably may be initiated through chemical activation.

The CCM member, the adhesive layer and the frame member are stacked in a stacking direction in this order.

Therein, the term "*stacking direction*" may be understood, for example, as a direction relating to the arrangement of layers on each other. For instance, one layer of a stack changes to another layer along the stacking direction.

The adhesive layer comprises an adhesive overlap section, which overlaps with the peripheral area and the frame overlap section, and which extends laterally inwards with respect to the peripheral area beyond the frame overlap section to delimit a process area of the CCM member. The adhesive overlap section forms an adhesive bond between the CCM member and at least the frame member.

Therein, the term "*adhesive overlap section*" may be understood as a volume section of the adhesive layer, which covers at least part of the surface of the CCM member. Further, the term "*lateral*" may be understood as sideways, or as a direction towards/away from the process area. The adhesive overlap section may provide a circumferential delimitation of the process area. The lateral direction may be perpendicular to the circumferential extension of the frame overlap section and/or to the stacking direction. The expression "*extending beyond*" may be understood as projecting past a structure, or as stretching to be outside limits of a structure. The term "process area" may be understood as a surface area that is actually available for electrochemical processing of reactants. Preferably, the inside perimeter of said adhesive layer may define the boundary of the process area.

Moreover, the one of the fluid distribution layers, which is arranged on the same membrane side as the frame member, is arranged laterally from the frame overlap section on the adhesive overlap section and on the process area. The frame member extends, at least at the frame overlap section, at least partially from the adhesive layer in the stacking direction beyond the one fluid distribution layer.

With the above-described design of the MEA, it can therefore be ensured that on one side of the MEA, the frame member forms the highest elevation in the stacking direction and thus, defines the thickness of the MEA on this side. Thus, a compression force can be applied on the MEA via the frame member. Thereby, the compression on the MEA joint area can be improved and consequently, the fluid tightness of the MEA in the cell assembly can be ensured. As a result, the MEA of this invention can be simply incorporated in already existing infrastructures for fuel cells or electrolysers. Additional components, such as shims or seals, are not needed any more for facilitating such integration.

According to a preferred embodiment, the frame member may comprise a sealing surface for forming a seal upon direct contact with an opposing counter-surface. Therein, the sealing surface may face away from the CCM member and may face in the stacking direction. Preferably, the sealing surface may be annular and/or flat. Alternatively or additionally, the sealing surface may comprise one or more surface features, such as a sealing lip, a ridge, a bulge with an outwardly convex curvature, or a sealing groove.

Thereby, it is possible to provide a defined structure for sealing the MEA at the frame member and thus, to incorporate sealing functionality in the frame member. Consequently, it is not necessary to provide a sealing element separate from the MEA anymore, which typically increases complexity, costs and technical challenges in correctly aligning the separate sealing elements with the MEA during manufacturing.

According to a further preferred embodiment, the frame member may comprise or consist of a rigid material.

Therein, the term "*rigid*" may be understood, for example, as a material, which does not deform or only minimally deforms (e.g. less than 0.05%) under typical operation pressures (e.g. 4 bar to 100 bar).

Thereby, it is possible to tailor the frame member of the MEA to the requirements of individual applications. For instance, rigid materials are beneficial for high compression of the joint area and thus, facilitate good fluid tightness of the MEA.

Alternatively or additionally, the frame member may comprise or consist of a resilient material, such as an elastomeric material.

Therein, the term "*resilient material*" may be understood, for example, as materials that are able to elastically deform under typical operation pressures (e.g. 4 bar to 100 bar).

Therein, the invention allows to replace in many MEA designs commonly used stiff frame material with a sheet of compliant material that can also serve as a seal for the MEA. Thus, the frame member provides the functionality of both, a seal and a frame. By eliminating such frame-only-structures and adhering the CCM member directly to a seal material, the MEA has fewer parts and becomes simpler to construct. Additionally, flat sheet seal materials, instead of more traditional seal beads, are much less complicated to produce and integrate into the MEA. Furthermore, resilient materials are beneficial for relaxing manufacturing tolerances for the cells of a cell stack and for providing good fluid tightness.

According to a preferred embodiment, the frame member may comprise a layered frame structure. The layered frame structure may comprise a frame layer and a seal layer. The frame layer and the seal layer may be stacked and arranged on the adhesive layer in this order in the stacking direction. Therein, the frame layer may comprise a rigid material. The seal layer may comprise a resilient material and/or may be made of an elastomeric sheet material. Preferably, the frame layer may comprise a smaller material thickness than the seal layer.

Thereby, it is possible to combine beneficial effects resulting from the provision of a rigid material for the frame layer and the provision of a resilient material for the seal layer. By providing the seal layer as the sealing surface, i.e. as a surface contacting an opposing surface of another stack component, the sealing effectiveness can be improved. Moreover, this configuration allows to choose from a wider range of materials, as the sealing function can be separated from the framing function due to the layered structure. For instance, a very flexible material can be selected for the seal layer while a very rigid material can be selected for the frame layer. Thereby, the durability and fluid tightness of the MEA can be improved. As a consequence, the thickness of the frame layer can be reduced.

According to a further preferred embodiment, the layered structure may further comprise a connecting layer for forming an adhesive bond between the frame layer and the seal layer. The connecting layer may be sandwiched between the frame layer and the seal layer. The connecting layer may comprise an adhesive or glue film for forming an adhesive bond between the frame layer and the seal layer.

Thereby, instances, where the adhesive layer does not adhere well to a seal material selected for the frame member, benefit from such design. In particular, the frame layer can bond to the adhesive layer while the connecting layer can adhere the seal material of the seal layer. Accordingly, a broad range of different materials can be considered for the seal layer and the frame layer, and stiffness or material compatibility issues between the different materials can overcome. As a consequence, the thickness of the frame layer can be reduced.

According to a preferred embodiment, the frame layer and the seal layer may be provided by being cut together in the same cutting step and preferably may be bonded to each other to form the layered structure at least before or after the cutting step.

Thereby, an accurate alignment between the individual layers can achieved that ensures and improves fluid tightness of the MEA. Moreover, complexity of manufacturing can be reduced.

According to a further preferred embodiment, the polymer membrane may be a proton-exchange membrane or an anion-exchange membrane.

Thereby, different membrane technologies can be utilized in the MEA design.

According to a preferred embodiment, at least one of the fluid distribution layers may be a porous transport layer and/or a gas diffusion layer. at least one of the fluid distribution layers may be made of a metal-based material and/or a carbon-based material.

Thereby, the MEA can be provided with components ensuring its functionality as an electrolyser cell or as a fuel cell.

According to a further preferred embodiment, the one fluid distribution layer may form an adhesive bond with the adhesive overlap section. Alternatively or additionally, the other fluid distribution layer may form an adhesive bond with the adhesive layer. Alternatively, the other fluid distribution layer may form a substance-to-substance bond with the CCM member. For instance, the polymer of the CCM member may flow into the porous structure of the respective fluid distribution layer to form the bond.

Thereby, the MEA can be provided with a single adhesive layer to bind all of its components together.

According to a preferred embodiment, the adhesive overlap section may extend circumferentially on the CCM member at least partially or completely along the inner perimeter of the frame overlap section. In other words, the adhesive overlap section may extend the same way as the frame overlap section in lengthwise and/or widthwise direction.

Thereby, the beneficial effects of the inventive design can be further amplified across the entire surface of the CCM member.

According to a further preferred embodiment, the one fluid distribution layer may be arranged adjacent to the frame overlap section and may form a circumferential gap separating the one fluid distribution layer and the frame overlap section. Preferably, the circumferential gap may be at least partially filled with an adhesive material. Therein, the adhesive material may preferably extend from the adhesive overlap section. Preferably, the adhesive material in the circumferential gap may be the same or may be different from the adhesive layer. For instance, the adhesive material may be solidified adhesive material from the adhesive layer received by the circumferential gap upon application of pressure onto the adhesive layer.

With the above arrangement, glue can flow into the small gap between the fluid distribution layer and the frame overlap section as well as into the open pores of the fluid distribution layer when the MEA is compressed for manufacturing. Thereby, the bond between the CCM member and the fluid distribution layer can be improved since the adhesive bond can be provided from at least two sides. Moreover, the adhesive material from the adhesive overlap section provides mechanical protection for the CCM member against sharp edges of the fluid distribution layer. Typically, the fluid distribution layer may be cut to size and thus, may have rough edges that could scratch the catalyst coating or otherwise damage the CCM member. Accordingly, the mechanical durability of the MEA can be improved with the above arrangement.

According to a preferred embodiment, the adhesive layer and/or the connecting layer may comprise an electrochemically inert material. For example, the adhesive layer and/or the connecting layer may be a glue film. For instance, the adhesive layer and/or the connecting layer may comprise a polymer, such as epoxies, urethanes, polyisobutylene, polyolefins, polyethylene and curable cross-linking agents.

Thereby, a bond between the respective components of the MEA can be quickly and reliably established.

According to a further preferred embodiment, the catalyst coating may cover the polymer membrane on at least one of the membrane sides partially. For instance, the CCM member may comprise at least one membrane section, which comprises a surface structure different from the catalyst coating. For example, the membrane section may be an uncoated surface section exposing a polymeric surface of the polymer membrane. Preferably, the membrane section may be located at least at the peripheral area. The membrane section and an opposing bonding surface of at least one of the fluid distribution layers and/or of the frame member may form a substance-to-substance bond. For instance, the polymer of the CCM member may flow into the porous structure of the respective fluid distribution layer to form the bond.

According to a preferred embodiment, the catalyst coating may cover the polymer membrane on at least one of the membrane sides completely. The fluid distribution layer may comprise in this case on the other of the membrane sides a peripheral edge section that may extend laterally outwards from the process area beyond the peripheral area and towards an adhesive peripheral section of the adhesive layer in the stacking direction. Therein, the adhesive peripheral section may extend from the adhesive overlap section laterally outwards with respect to the process area beyond the peripheral area.

With each of the above said configurations, a reliable connection between all components of the MEA can be ensured without having to provide a further adhesive layer to establish said connection.

A further aspect of the invention relates to a solid polymer electrolyte electrolyser cell stack that comprises a series stack of a plurality of the above-described membrane electrode assemblies.

A further aspect of the invention relates to a solid polymer electrolyte fuel cell stack that comprises a series stack of a plurality of the above-described membrane electrode assemblies.

For both of these aspects of the invention, the same advantages and effects can be achieved as described already above for the MEA. In particular, chemical degradation and manufacturing costs can be reduced due to the advantageous design of the MEA.

A further aspect of the invention relates to a method of manufacturing the above-described membrane electrode assembly. Therein, the CCM member, the frame member, the two fluid distribution layers and the adhesive layer are obtained. The CCM member, the fluid distribution layers, the frame member, and the adhesive layer are stacked in a stacking direction. Specifically, they are stacked such that the frame member is located on one of the membrane sides, and that the adhesive layer is located between the frame member and the CCM member. Further, they are stacked such that one of the fluid distribution layers is located on the same membrane side as the frame member and within an area delimited by the frame overlap section of the frame member, thereby covering at least part of the adhesive layer and covering at least part of the CCM member. Further, the CCM member, the fluid distribution layers, the frame member, and the adhesive layer are stacked such that the other of the fluid distribution layers is located adjacent to the CCM member on the other of the membrane sides. The CCM member, the fluid distribution layers, the frame member, and the adhesive layer are aligned such that the peripheral area, the frame overlap section and the adhesive overlap section overlap with each other at least partially. Further, the alignment is such that the adhesive overlap section extends laterally inwards with respect to the peripheral area beyond the frame overlap section to delimit the process area of the CCM member. Moreover, the alignment is such that the one fluid distribution layer is located laterally from the frame overlap section and on at least a part of the adhesive overlap section that extends beyond the frame overlap section. Further, the alignment is such that the other fluid distribution layer overlaps at least partially with the adhesive layer. The adhesive layer is activated at least at the adhesive overlap section such that the adhesive layer bonds at least the frame member and the one fluid distribution layer to the CCM member.

Preferably, the adhesive layer may be activated by compressing. Preferably, the other fluid distribution layer may form an adhesive bond with the frame member through the adhesive layer. Alternatively or additionally, the other fluid distribution layer may form a substance-to-substance bond with the CCM member through the adhesive layer. For instance, the polymer of the CCM member may flow into the porous structure of the respective fluid distribution layer to form the bond.

Therein, the term "*activating*" may refer to a process which renders an adhesive "sticky" and/or capable of adhering to various components of the MEA. For instance, activating may include the process of curing a curable adhesive such as an epoxy. Activating may also include the process of thermally treating a thermosetting adhesive such as urethane or a polyisobutylene or a thermoplastic adhesive such as a polyolefin. Further, activating may include chemically treating a suitable chemically activated adhesive material (e.g. activating using UV radiation). Thus, depending on the nature of the materials used in the adhesive layer, an activating step may include curing, thermally activating, and/or chemically activating.

As described already above, the above configurations of the manufacturing process allow that manufacturing complexity, time and costs can be reduced since only a small number of parts is needed to form the MEA. Further, by manufacturing the MEA in this manner, the detrimental effects of chemical degradation can be reduced or even eliminated, and the durability of the MEA can be improved.

According to a preferred embodiment, the frame member may be obtained by forming a layered frame structure from stacking at least a frame layer and a seal layer in the stacking direction, bonding the so stacked layers of the layered frame structure to each other, and cutting the bonded layered frame structure in a cutting step.

Accordingly, it is possible to achieve accurate alignment between the frame layer and the seal layer since the two structures are obtained and bonded within the same manufacturing step. Thus, manufacturing complexity can be reduced, and the MEA can be improved.

A further aspect of the invention relates to the use of the above-described membrane electrode assembly, the above-described solid polymer electrolyte electrolyser cell stack or the above-described solid polymer electrolyte fuel cell stack for electrolysis of water or a fuel cell process.

These and other aspects of the invention are evident upon reference to the attached

### Figures and following detailed description.

- **Figure 1**: shows a schematic top view of an embodiment of a MEA of the invention.
- **Figures 2 to 14**: show schematic close-up cross-sectional views along line A-A and/or line B-B in Figure 1 for different embodiments of the MEA of the invention.

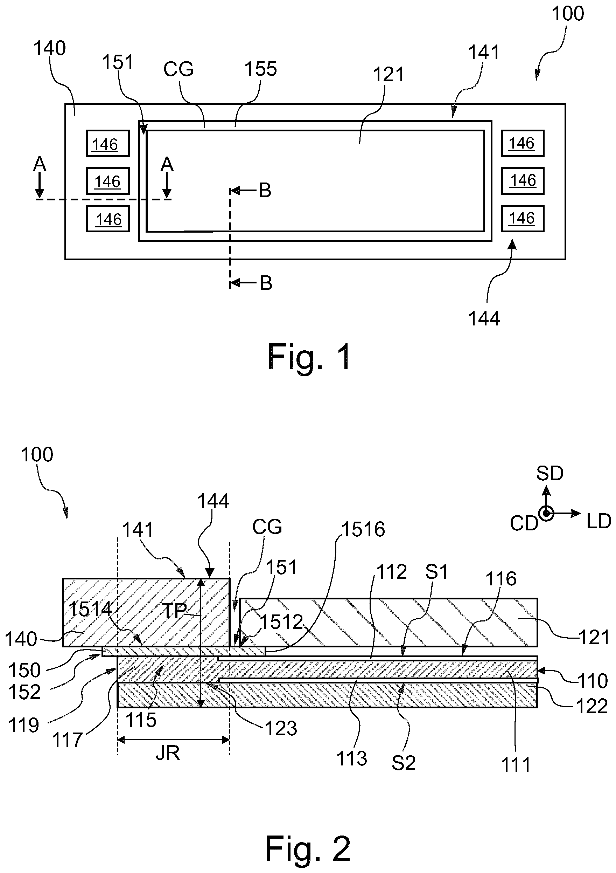

Figures 1 to 14 show different views and different aspects of different embodiments of a MEA 100 of the invention. Specifically, Figures 2 to 14 represent sectional views along line A-A and/or line B-B in Figure 1.

The MEA 100 of the invention is configured to be used in a stackable cell for a fuel cell process or for the electrolysis of water. Typically, in industrial applications, a solid polymer electrolyte cell stack is used for this purpose. In such cell stack, a plurality of the MEA 100 is stacked and connected in series. Such a cell stack also forms part of the invention, despite not being explicitly illustrated in the Figures.

As can be taken from Figures 2 to 14, the MEA 100 comprises a CCM member 110. The CCM member 110 is the electrochemically active core unit of the MEA 100 and comprises a polymer membrane 111, which forms a solid electrolyte for exchange of ions between its two opposite membrane sides S1, S2. For example, the polymer membrane 111 can be a proton-exchange membrane or an anion-exchange membrane. Accordingly, depending on the type of membrane used, the polymer membrane 111 may form a solid electrolyte for exchange of cations (e.g. protons) or anions. Further, the CCM member 110 may have any shape, such as rectangular, and may have a film-like or plate-like form. The CCM member 110 may be provided as a flexible film material, for example.

On both membrane sides S1, S2, a catalyst coating 112, 113 is applied, which is receptive to electrons, and which extends on each of the membrane sides S1, S2 at least partially.

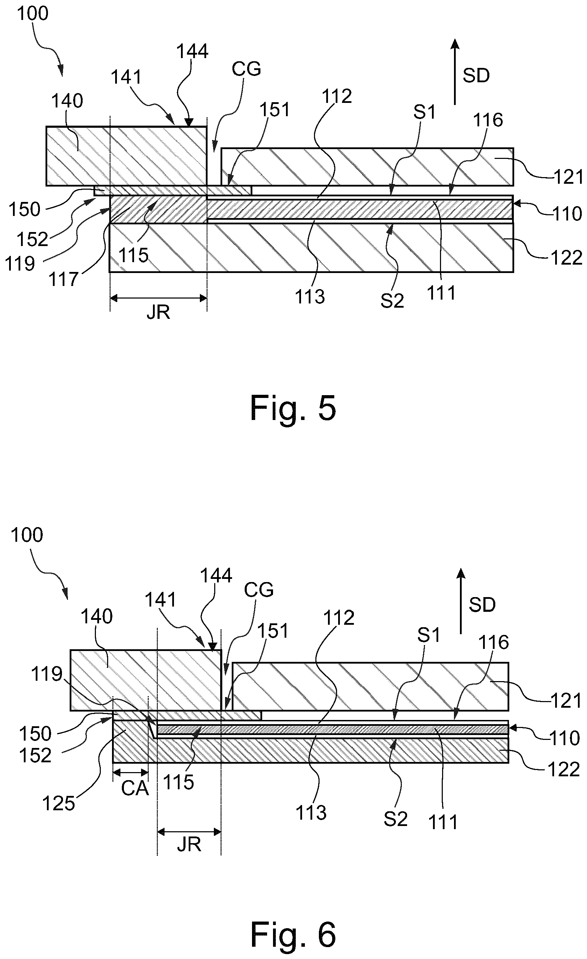

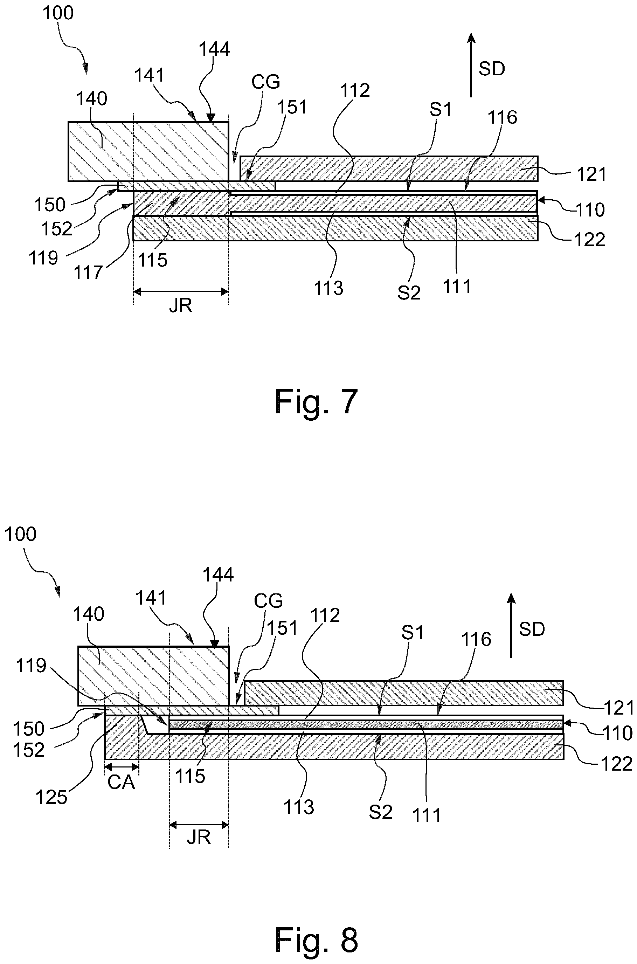

For example, each of Figures 1-5, 7 and 9 to 14 shows a configuration of the CCM member 110, in which the polymer membrane 111 is only partially covered on both membrane sides S1, S2 with the catalyst coating 112, 113, because a membrane section 117 is provided, which is an uncoated surface section that exposes a polymeric surface of the polymer membrane 111. In the illustrated examples, the membrane section 117 extends at a peripheral area 115 of the CCM member 110 on both membrane sides S1, S2. However, these are only examples and are not considered a complete enumeration. For example, the membrane section 117 may comprise a surface structure different from the catalyst coating 112, 113. Thus, for instance, the membrane section 117 may comprise a different coating than the catalyst coating 112, 113. Also, it is conceivable that the membrane section 117 may be arranged on a different location or spread out over multiple locations on either of the membrane sides S1, S2. Each of Figures 6 and 8 shows an alternative configuration of the CCM member 110, in which the polymer membrane 111 is completely covered on both membrane sides S1, S2 by the catalyst coating 112, 113. Thus, the polymer membrane 111 may be window coated or non-window coated with the catalyst coatings 112, 113.

Each of the catalyst coatings 112, 113 forms an electrode for conducting electrons associated with the exchange of ions at the polymer membrane 111. Therein, each of the two catalyst coatings 112, 113 may be configured to function either as an anode or a cathode in the electrolysis process. Therefore, in the following, no further reference is made on the arrangement of the anode and the cathode, as either catalyst coatings 112, 113 may function as one or the other.

As can be taken further from the Figures 1 to 14, the MEA 100 also comprises a frame member 140 for framing the CCM member 110. For instance, the frame member 140 may hold the CCM member 110 in place. The frame member 140 comprises a frame overlap section 141 that may surround an opening provided in the frame member 140. In the example of Figure 1, the frame member 140 may comprise a rectangular shape with a rectangular through hole. Figure 1 further illustrates that the frame member 140 may comprise ports 146 for the transport of process streams to and from a corresponding fuel cell or electrolyser cell.

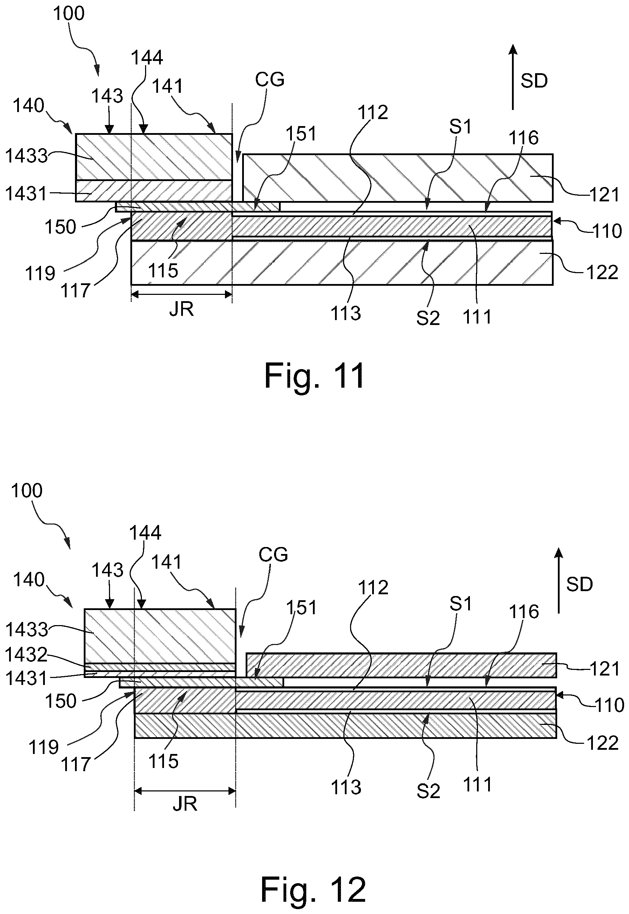

As can be taken further from the Figures 2 to 14, the MEA 100 also comprises two fluid distribution layers 121, 122. The fluid distribution layers 121, 122 are configured to form a diffusor structure for surface distribution and/or collection of fluid process streams of the CCM member 110. Therein, it is conceivable to provide both or only one of the fluid distribution layers 121, 122 as PTLs or as GDLs. At least one of the two fluid distribution layers 121, 122 may be metal-based or any material composition otherwise suitable for receiving or sustaining high electric potentials. Preferably, the catalyst coating 112, 113 on the membrane side S1, S2 where the metal-based fluid distribution layer 121, 122 is provided, may function as anode of the MEA 100. However, it is conceivable to provide both or only one of the fluid distribution layers 121, 122 from a metal-based material and thus, irrespective of the location of the anode or cathode. For instance, Figures 5 and 11 show exemplary configurations of the MEA 100 with the two fluid distribution layers 121, 122 being both metal-based (wide hatching). Figures 7, 8 and 12 to 14 show exemplary configurations of the MEA 100 with the two fluid distribution layers 121, 122 being both made of a carbon-based material (narrow hatching). Figures 2 to 4, 6, 9 and 10 show exemplary configurations of the MEA 100 with the two fluid distribution layers 121, 122 being made of a carbon-based material (narrow hatching), e.g. for a cathode, and the other made of a metal-based material (wide hatching), e.g. for an anode.

As can be taken further from the Figures 1 to 14, the MEA 100 also comprises an adhesive layer 150 for forming an adhesive bond between the CCM member 110, at least one of the fluid distribution layers 121, 122, and at least the frame member 140. For example, the adhesive layer 150 may be provided as a glue film and may comprise a polymer selected from the group of epoxies, urethanes, polyisobutylene, polyolefins, polyethylene and curable cross-linking agents.

In the following, relative positioning of the above-described components of the MEA 100 to each other is described.

The CCM member 110, the adhesive layer 150 and the frame member 140 are provided in a stacked manner. Specifically, the CCM member 110, the adhesive layer 150 and the frame member 140 are in this order in a stacking direction SD. The stacking direction SD is indicated with an arrow in Figures 2 to 14.

The adhesive layer 150 is provided on one of the membrane sides S1, S2 in a manner that it overlaps the peripheral area 115 of the CCM member 110 with an adhesive overlap section 151.

The frame member 140 is arranged on the same membrane side S1 as the adhesive layer 150 and positioned in a manner that the frame overlap section 141 overlaps with the peripheral area 115 and the adhesive overlap section 151. In Figure 2, this section of the adhesive layer 150 is exemplarily highlighted with first portion 1514. Thus, the adhesive overlap section 151 can form an adhesive connection between the frame member 140 and the CCM member 110 so that a joint region JR is established at the peripheral area 115.

The adhesive overlap section 151 is provided in a manner that it extends laterally inwards beyond the frame overlap section 141. This means that the adhesive layer 150 extends with the adhesive overlap section 151 sideways over the CCM member 110 such that it delimits a process area 116 of the CCM member 110. For clarity, in Figures 2, 3 and 9 a coordinate system is provided, which indicates a lateral direction LD. In other words, the adhesive overlap section 151 comprises a second portion 1512 that covers further parts of the surface of the CCM member 110 beyond the peripheral area 115. Accordingly, the second portion 1512 covers also other parts of the surface of the CCM member 110 than the frame overlap section 141. Thus, the adhesive overlap section 151 delimits the active area of the CCM membrane 110 available for electrochemical processing, and thereby, delimits the process area 116 of the CCM membrane 110. Accordingly, an inside edge 1516 of the adhesive overlap section 151 may mark the boundary of the process area 116. This is exemplarily illustrated in Figure 2 and equally applicable to all other Figures.

The fluid distribution layer 121 that is arranged on the same membrane side S1 as the frame member 140, is also arranged laterally from the frame overlap section 141 and placed on the process area 116 and to extend over the adhesive overlap section 151. Thereby, also the fluid distribution layer 121 can be adhesively bonded by the adhesive overlap section 151 to the CCM member 110. The other fluid distribution layer 122 may be arranged on the other membrane side S2.

According to the invention, the frame member 140 comprises a particular configuration with respect to the fluid distribution layer 121 that is arranged to its side. In particular, the frame member 140 is provided such that it extends from the adhesive layer 150 in the stacking direction SD to an extent that it extends beyond the fluid distribution layer 121. Accordingly, the thickest point TP of the MEA 100 on the membrane side S1 is defined by the frame member 140. Preferably, the frame member 140 may at least comprise a height in the stacking direction SD that corresponds with at least a height required for sealing means between neighbouring MEAs 100.

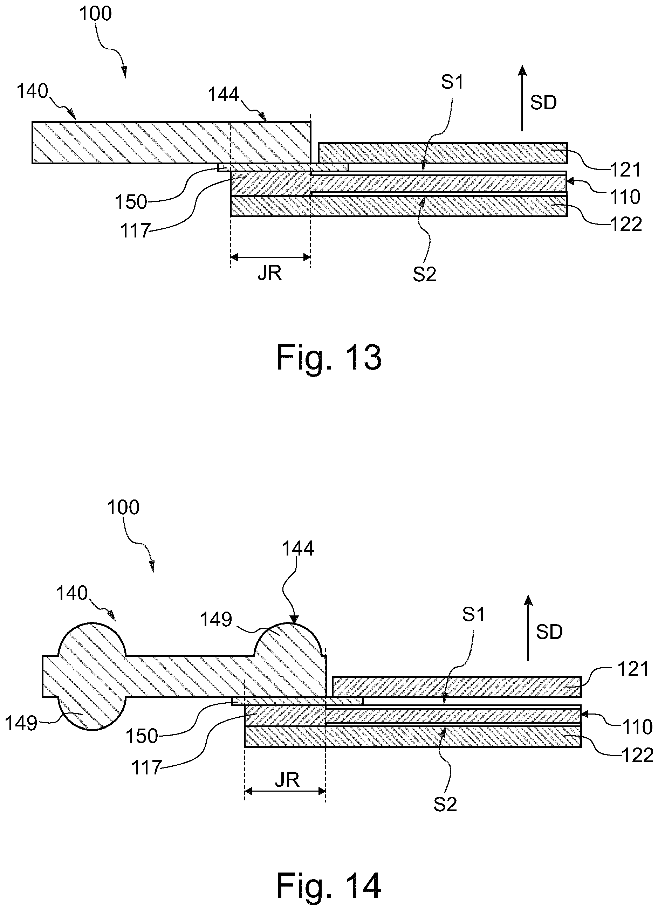

The frame member 140 may further be configured to comprise a sealing surface 144 for forming a seal upon direct contact with an opposing counter-surface. The sealing surface 144 is exemplarily illustrated in all Figures. As illustrated in Figures 2 to 13, the sealing surface 144 may be annular and flat. Alternatively, as shown in Figure 14, the sealing surface 144 may comprise one or more surface features 149, such as a sealing lip. It is also conceivable to provide the sealing surface 144 with two types of surface features 149, which may extent out of a plane of the sealing surface 144 and may have an outwardly convex curvature (cf. Figure 14). One of these types of the surface features 149 may be arranged for providing compressive support for the joint region JR of the MEA 100. For instance, the inner bulge of the sealing surface 144 may be provided for this purpose. The other type of the surface features 149 may be arranged for sealing the MEA 100 in a stack.

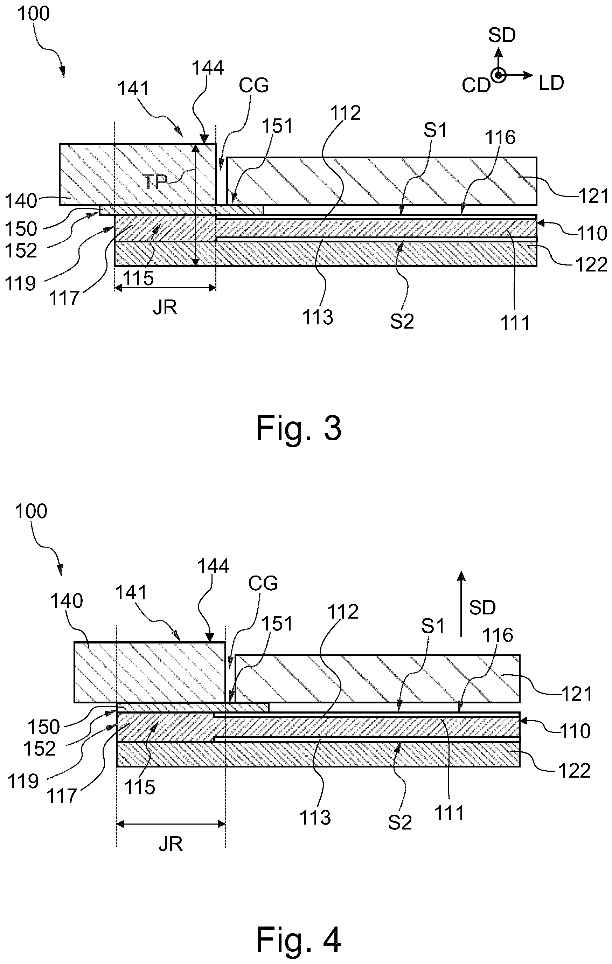

Figures 2 and 3 show the frame member 140 exemplarily as comprising only a single material. For instance, in Figure 2, the frame member 140 consists of a rigid material, such as a material that is typically used as a frame in MEA applications. Figure 3, in comparison, shows an exemplarily embodiment, in which the frame member 140 consists of a resilient material, such as an elastomeric material.

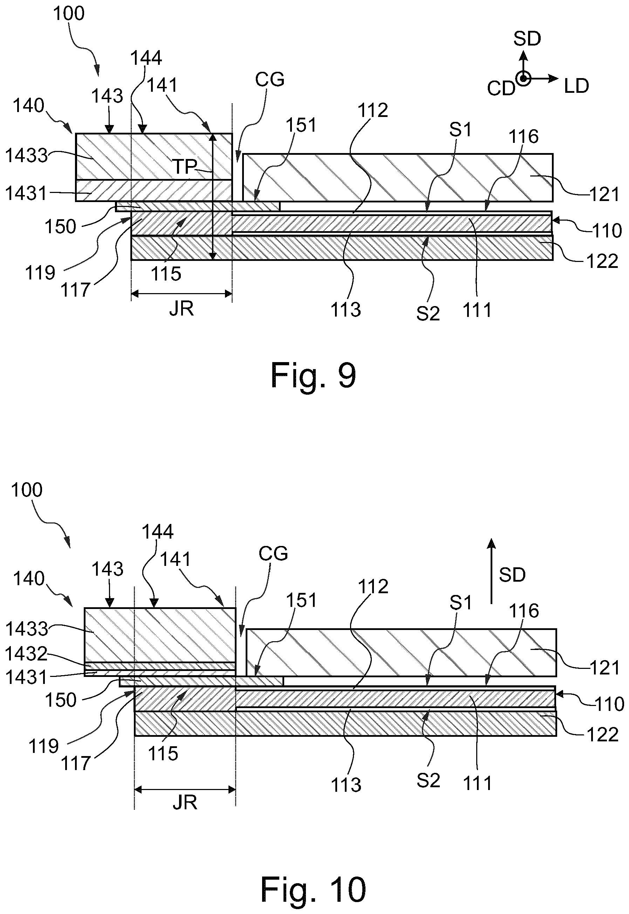

Figures 9 and 10 show the frame member 140 exemplarily as being formed by a layered frame structure 143. The frame structure 143 may comprise a rigid frame layer 1431 and a resilient seal layer 1433, which are stacked and arranged in this order in the stacking direction SD. The frame structure 143 may then be placed with the frame layer 1434 on top of the adhesive layer 150 in the stacking direction SD. Accordingly, the seal layer 1433 may form the outmost layer of the MEA 100. The frame layer 1431 may preferably be provided with a smaller material thickness than the seal layer 1433. In Figure 10, the layered frame structure 143 comprises an additional layer, namely a connecting layer 1432 for connecting the frame layer 1431 and the seal layer 1433 to each other. For example, the connecting layer 1432 may be an adhesive or glue film. Preferably, the frame structure 143 may be manufactured in a unitary process, in which the frame layer 1431 and the seal layer 1433 may be bonded and cut together in the same cutting step to achieve accurate alignment of the respective layers.

In Figures 1 to 14, a further exemplarily configuration of the MEA 100 is shown, in which the fluid distribution layer 121 may be arranged adjacent but at a distance to the frame overlap section 141 so that a small circumferential gap CG is formed, by which the fluid distribution layer 121 is separated from the frame overlap section 141.

For clarity, a circumferential direction CD is indicated in Figures 2, 3 and 9. Adhesive material 155 from the adhesive overlap section 151 may at least partially fill the circumferential gap CG. This may be a result of a manufacturing step, in which pressure is applied on the one fluid distribution layer 121, in which the adhesive material 155 becomes flowable and solidifies at the end of the step.

Figure 1 exemplarily shows further that the components of the MEA 100 may be centred with respect to the CCM member 110. Preferably, the MEA 100 may comprise one or more symmetry axes. More preferred, the MEA 100 may comprise symmetry axis that may be aligned with at least one of the symmetry axes of the CCM member 110.

Except for Figures 6 and 8, all examples show the MEA 100 with the CCM member 110 comprising the membrane section 117, which comprises at the peripheral area 115 an uncoated surface section exposing a polymeric surface of the polymer membrane 111 on both membrane sides S1, S2. In the examples of the majority of the Figures, the membrane section 117 facilitates a substance-to-substance bond with an opposing bonding surface 123 of the fluid distribution layer 122. For instance, the polymer of the CCM member 110 may flow into the porous structure of the fluid distribution layer 122 to form a bond. For clarity, only Figure 2 shows reference sign 123 but can be equally applied to all embodiments that comprise the membrane section 117. Accordingly, no additional adhesive is needed in the MEA 100 to bond the fluid distribution layer 122 to the CCM member 100.

Figures 6 and 8 show an exemplarily embodiment of the MEA 100 similar to Figure 3. Unlike in Figure 3 and the other Figures, the CCM member 110 in Figures 6 and 8 is completely covered by the catalyst coating 112, 113. Thus, substance-to-substance bonding between the CCM member 110 and the fluid distribution layer 122 is not available. Therefore, the fluid distribution layer 122 extends with a peripheral edge section 125 beyond the peripheral area 115 to provide a polymeric surface with a contact area CA for adhesive bonding with the frame member 140 via the adhesive layer 150. Therein, preferably, the adhesive layer 150 may comprise an adhesive peripheral section 152 that faces in an opposite direction to the adhesive overlap section 151 and that extends from the adhesive overlap section 151 beyond the peripheral area 115. Thus, no additional adhesive is needed to bond the fluid distribution layer 122 to the CCM member 110. The peripheral edge section 152 may extend to be flush with the peripheral edge 119. Alternatively, the peripheral edge section 152 may extend beyond a peripheral edge 119 of the CCM member 110. For instance, in Figures 6 and 8 the peripheral edge section 152 may extend beyond the CCM member 119 to be flush with the peripheral edge section 125.

The invention is not limited by the embodiments as described hereinabove, as long as being covered by the appended claims. All features of the embodiments described hereinabove can be combined in any possible way and be provided interchangeably.

### Reference signs

- 100: membrane electrode assembly
- 110: catalyst coated membrane member, CCM member
- 112, 113: catalyst coating
- 115: peripheral area
- 116: process area
- 117: membrane section
- 119: peripheral edge
- 121, 122: fluid distribution layer(s)
- 123: bonding surface
- 125: peripheral edge section
- 140: frame member
- 141: frame overlap section
- 143: layered frame structure
- 1431: frame layer
- 1432: connection layer
- 1433: seal layer
- 144: sealing surface
- 146: ports
- 149: surface feature
- 150: adhesive layer
- 151: adhesive overlap section
- 1512: second portion
- 1514: first portion
- 1516: inside edge
- 152: adhesive peripheral section
- 155: adhesive material
- S1, S2: membrane side(s)
- CG: circumferential gap
- TP: thickest point
- CA: contact area
- JR: joint region
- CD: circumferential direction
- LD: lateral direction
- SD: stacking direction

## Claims

1. A membrane electrode assembly (100) for a stackable cell for a fuel cell process and/or for electrolysis, comprising:
a catalyst coated membrane (CCM) member (110) forming an electrochemically active core unit of the membrane electrode assembly (100), comprising:
a polymer membrane (111) forming a solid electrolyte for exchange of ions between its two opposite membrane sides (S1, S2), and
a catalyst coating (112, 113) receptive to electrons, applied at least partially to both membrane sides (S1, S2), each forming an electrode for conducting electrons associated with the exchange of ions at the polymer membrane (111);
a frame member (140) for framing the CCM member (110), the frame member (140) being arranged on one of the membrane sides (S1, S2), the frame member (140) comprising a frame overlap section (141) that overlaps a peripheral area (115) of the CCM member (110);
two fluid distribution layers (121, 122), each arranged on one of the membrane sides (S1, S2) and each forming a diffusor structure for surface distribution and/or collection of fluid process streams for the respective membrane side (S1, S2); and
an adhesive layer (150) provided on the same membrane side (S1, S2) as the frame member (140);
the CCM member (110), the adhesive layer (150) and the frame member (140) being stacked in a stacking direction (SD) in this order;
**characterized by**
the adhesive layer (150) comprising an adhesive overlap section (151) that overlaps with the peripheral area (115) and the frame overlap section (141), and forms an adhesive bond between the CCM member (110) and at least the frame member (140), wherein the adhesive overlap section (151) extends laterally inwards with respect to the peripheral area (115) beyond the frame overlap section (141) to delimit a process area (116) of the CCM member (110);
the one of the fluid distribution layers (121, 122), which is arranged on the same membrane side (S1, S2) as the frame member (140), being arranged laterally from the frame overlap section (141) on the adhesive overlap section (151) and on the process area (116); and
the frame member (140), at least at the frame overlap section (141), extending at least partially from the adhesive layer (150) in the stacking direction (SD) beyond the one fluid distribution layer (121, 122).

2. The membrane electrode assembly (100) according to claim 1, wherein the frame member (140) comprises a sealing surface (144), which faces away from the CCM member (110) and in the stacking direction (SD), for forming a seal upon direct contact with an opposing counter-surface, wherein preferably the sealing surface (144) is annular, flat and/or comprises one or more surface features (149), such as a sealing lip, a ridge, a bulge with an outwardly convex curvature, or a sealing groove.

3. The membrane electrode assembly (100) according to claim 1 or claim 2, wherein the frame member (140) comprises or consists of a rigid material and/or a resilient material, such as an elastomeric material.

4. The membrane electrode assembly (100) according to claim 1 or claim 2, wherein the frame member (140) comprises a layered frame structure (143), which comprises a frame layer (1431) and a seal layer (1433), which are stacked and arranged in this order in the stacking direction (SD) on the adhesive layer (150), wherein the frame layer (1431) comprises a rigid material, and wherein the seal layer (1433) comprises a resilient material and/or is made of an elastomeric sheet material, wherein preferably the frame layer (1431) comprises a smaller material thickness than the seal layer (1433).

5. The membrane electrode assembly (100) according to claim 4, wherein the layered structure (143) further comprises a connecting layer (1432) for connecting the frame layer (1431) and the seal layer (1433), wherein the connecting layer (1432) is sandwiched between the frame layer (1431) and the seal layer (1433), and preferably comprises an adhesive or glue film for forming an adhesive bond between the frame layer (1431) and the seal layer (1433).

6. The membrane electrode assembly (100) according to claim 4 or claim 5, wherein the frame layer (1431) and the seal layer (1433) are provided by being cut together in the same cutting step and preferably bonded to each other before or after the cutting step to form the layered structure (143).

7. The membrane electrode assembly (100) according to anyone of the preceding claims, wherein the polymer membrane (111) is a proton-exchange membrane or an anion-exchange membrane.

8. The membrane electrode assembly (100) according to anyone of the preceding claims, wherein at least one of the fluid distribution layers (121, 122) is a porous transport layer and/or a gas diffusion layer, and/or
wherein at least one of the fluid distribution layers (121, 122) is made of a metal-based material and/or a carbon-based material.

9. The membrane electrode assembly (100) according to anyone of the preceding claims, wherein the one fluid distribution layer (121, 122) is arranged adjacent to the frame overlap section (141), forming a circumferential gap (CG) separating the one fluid distribution layer (121, 122) and the frame overlap section (141), wherein preferably the circumferential gap (CG) is at least partially filled with an adhesive material (155), preferably extending from the adhesive overlap section (151).

10. The membrane electrode assembly (100) according to anyone of the preceding claims, wherein the catalyst coating (112, 113) covers the polymer membrane (111) on at least one of the membrane sides (S1, S2) partially, wherein the CCM member (110) comprises at least one membrane section (117), which comprises a surface structure different from the catalyst coating (112, 113), such as an uncoated surface section exposing a polymeric surface of the polymer membrane (111), and which is located at least at the peripheral area (115), and wherein the membrane section (117) and an opposing bonding surface (123) of at least one of the fluid distribution layers (121, 122) and/or of the frame member (140) are bonded to each other.

11. The membrane electrode assembly (100) according to anyone of the preceding claims, wherein the catalyst coating (112, 113) covers the polymer membrane (111) on at least one of the membrane sides (S1, S2) completely, wherein the fluid distribution layer (121, 122) on the other of the membrane sides (S1, S2) comprises a peripheral edge section (125) that extends laterally outwards from the process area (116) beyond the peripheral area (115) and towards an adhesive peripheral section (152) of the adhesive layer (150) in the stacking direction (SD), wherein the adhesive peripheral section (152) extends from the adhesive overlap section (151) laterally outwards with respect to the process area (116) beyond the peripheral area (115).

12. A solid polymer electrolyte electrolyser cell stack or solid polymer electrolyte fuel cell stack, **characterized by** comprising a series stack of a plurality of the membrane electrode assemblies (100) according to anyone of the preceding claims.

13. A method of manufacturing the membrane electrode assembly (100) of one of the claims 1 to 12, comprising:
- obtaining the CCM member (110);
- obtaining the frame member (140);
- obtaining the two fluid distribution layers (121, 122);
- obtaining the adhesive layer (150);
**characterized by**
- stacking the CCM member (110), the fluid distribution layers (121, 122), the frame member (140), and the adhesive layer (150) in a stacking direction (SD) such that
∘ the frame member (140) is located on one of the membrane sides (S1, S2);
∘ the adhesive layer (150) is located between the frame member (140) and the CCM member (110);
∘ one of the fluid distribution layers (121, 122) is located on the same membrane side (S1, S2) as the frame member (140) and within an area delimited by the frame overlap section (141) of the frame member (140), covering at least part of the adhesive layer (150) and at least part of the CCM member (110);
∘ the other of the fluid distribution layers (121, 122) is located adjacent to the CCM member (110) on the other of the membrane sides (S1, S2);
- aligning the CCM member (110), the fluid distribution layers (121, 122), the frame member (140), and the adhesive layer (150) such that
∘ the peripheral area (115), the frame overlap section (141) and the adhesive overlap section (151) overlap with each other at least partially;
∘ the adhesive overlap section (151) extends laterally inwards with respect to the peripheral area (115) beyond the frame overlap section (141) to delimit the process area (116) of the CCM member (110);
∘ the one fluid distribution layer (121, 122) is located laterally from the frame overlap section (141) and on at least a part of the adhesive overlap section (151) that extends beyond the frame overlap section (141); and
∘ the other fluid distribution layer (121, 122) overlaps at least partially with the adhesive layer (150); and
- activating the adhesive layer (150) at least at the adhesive overlap section (151), preferably by compressing, such that the adhesive layer (150) bonds at least the frame member (140) and the one fluid distribution layer (121, 122) to the CCM member (110).

14. The method of claim 13, wherein the other fluid distribution layer (121, 122) forms an adhesive bond with the frame member (140) and/or with the CCM member (110) through the adhesive layer (150).

15. The method of claim 13 or claim 14, wherein the frame member (140) is obtained by
- forming a layered frame structure (143) from stacking at least a frame layer (1431) and a seal layer (1433) in the stacking direction (SD),
- bonding the stacked layers of the layered frame structure (143) to each other, and
- cutting the bonded layered frame structure (143) in a cutting step.
